# EUROPEAN PATENT APPLICATION

(11) **EP 3 009 749 A1**
(43) Date of publication of application: **20.04.2016**
(21) Application number: 14810486.2
(22) Date of filing: 10.06.2014
(51) Int. Cl.: F24D 3/16, F24D 19/02, F24F 5/00, F28F 17/00

(54) **RADIATION PANEL DEVICE**

(30) Priority: 11.06.2013 JP 2013122925
(71) Applicant: Asahi Kasei Homes Corporation, Tokyo 160-8345 (JP)
(72) Inventor: MATSUDA Katsumi, Tokyo 160-8345 (JP); OHI Kazuki, Takaoka-city Toyama 933-8610 (JP)
(74) Representative: D Young & Co LLP
(86) International application number: PCT/JP2014/065348
(87) International publication number: WO 2014/199983

(57) **Abstract**

A radiation panel device includes a bridge disposed horizontally, a plurality of panels suspending from the bridge, and a heating medium flow pipe provided in each of the panels and connected to each other above the bridge. The radiation panel device provides emissivity to each of the panels by connecting the heating medium flow pipe to a heat source so as to circulate a heating medium. In this device, a lower surface portion of the bridge has a pair of inclination portions. The pair of inclination portions is inclined downwardly toward a corner portion, namely, a widthwise center portion. On the panel, one end portion of widthwise both-end portions faces one inclination portion of the bridge, and the other end portion of the widthwise both-end portions faces the other inclination portion of the bridge.

## Description

### Technical Field

The present invention relates to a radiation panel device for performing radiant heating and radiant cooling.

### Background Art

Conventionally, a radiation panel device that includes a plurality of panels through which a liquid-state heating medium such as water can flow is known. This type of radiation panel device causes the heating medium to circulate through the plurality of panels and a separately-installed heat source so as to provide emissivity to each of the panels. These panels can be used for radiant heating and radiant cooling for air conditioning of a room or the like.

For example, Patent Literature 1 discloses a radiation panel device provided with a plurality of radiation panel materials that house a heating medium flow pipe through which a heating medium flows in the panel. This device causes the heating medium to flow through the heating medium flow pipe of the radiation panel material to radiate radiant heat from the radiation panel material. Patent Literature 2 discloses a radiation panel device in which an entire bridge is exposed beneath a ceiling, and a bottom plate portion of the bridge forms a V-shape.

### Citation List

### Patent Literature

Patent Literature 1 JP 2006-153431 A
Patent Literature 2 JP 2010-243126 A

### Summary of Invention

### Technical Problem

However, in the radiation panel device described in Patent Literature 2, only one inclination portion (first inclination portion) of the bottom plate portion of the bridge formed in a V-shape faces an upper end of the panel, and another inclination portion (second inclination portion) protrudes from the upper end of the panel. Therefore, this bottom plate portion of the bridge is provided in a form of a shed-roof sloping one way, with respect to the panel. In addition, the lowest portion of the first inclination portion, namely, a corner portion connecting the first inclination portion and the second inclination portion is located at one end portion (widthwise) of the panel. Therefore, water droplets attached to the first inclination portion are transferred to the corner portion, and then reach the one end portion of the panel, from which the water droplets fall toward the bottom of the panel (surrounding area on the floor). The water droplets that fall from the end portion of the panel to the bottom of the panel might scatter beyond the panel widthwise area in some cases, and may cause soiling of the surrounding areas of the device.

An object of the present invention is to provide a radiation panel device capable of suppressing scattering of water droplets or the like to surrounding areas of the device even when water droplets or the like attach to the bridge.

### Solution to Problem

One aspect of the present invention is a radiation panel device including a bridge disposed horizontally, a plurality of panels suspending from the bridge, and a heating medium flow pipe provided in each of the panels and connected to each other above the bridge. The radiation panel device is configured to provide emissivity to each of the panels by connecting the heating medium flow pipe to a heat source so as to circulate a heating medium. In this device, a lower surface portion of the bridge has a pair of inclination portions on widthwise both-end portions. The pair of inclination portions is inclined downwardly toward a widthwise center portion. Each of the panels is attached to the lower surface portion of the bridge in a state where one of the widthwise end portions faces one of the inclination portions of the bridge, and the other of the widthwise end portions faces the other of the inclination portions.

In one aspect of the present invention, the corner portion connected to the pair of inclination portion is located at least in a widthwise inner area of the bridge and panel. Accordingly, there is a certain distance between the corner portion and a widthwise outer area when the water droplets attached to the lower surface of the bridge fall from the corner portion. This suppresses movement of the falling water droplets toward the panel widthwise outer area. Furthermore, when the water droplets fall onto the floor or onto a dish or the like disposed on the floor, scattering from the splash of water droplets to the widthwise outer area can be suppressed due to this distance.

Furthermore, the lower surface portion of the bridge may form a V-shape by connecting each of lower end portions of the pair of inclination portions to each other. This makes it possible to cause most of the water droplets attached on the lower surface portion to fall from the corner portion formed by connecting the pair of inclination portions, and to provide a falling water droplets width that is smaller than a bridge width.

Furthermore, the bridge may form an equilateral and symmetrical V-shape at the pair of inclination portions. This allows the water droplets attached on the lower surface of the bridge to fall from a bridge-widthwise center portion and to be reliably received by a dish or the like disposed on the floor.

Furthermore, the bridge may be configured such that a fixture for fixing each of the panels is provided at panel-widthwise both-end sides on an upper side of the inclination portion, and a run-through portion through which the heating medium flow pipe is inserted is provided at a panel-widthwise center portion. This allows the heating medium flow pipe and the fixture to be spaced from each other. With this arrangement, it is possible to suppress dew condensation on the fixture or in surrounding areas of the fixture due to a thermal effect from the heating medium flow pipe, and to suppress rusting of the fixture due to dew condensation. Since the fixture is provided on an upper side of the center of the inclination portion, even when dew condensation occurs on an inner side of the bridge, the water droplets go down along the inclination. This arrangement can prevent water droplets staying in surrounding areas of the fixture for a long time.

An upper portion of the bridge may be covered with a cover member. With this, the heating medium flow pipe above the bridge can be covered with the cover member and become insusceptible to external influences such as an unexpected impact and dust. Furthermore, this also enhances appearance.

The bridge is disposed horizontally in a state closely facing the ceiling of the room. The heating medium flow pipe includes a header portion configured to supply a heating medium evenly to each of the panels. At least part of the header portion may be arranged so as to extend toward the ceiling by penetrating through the cover member. With this arrangement, it is possible to connect the heating medium flow pipe to the heat source through a ceiling back space and to suppress exposure of the heating medium flow pipe.

The bridge is fixed to the ceiling via a supporting member and the supporting member may include an adjustment mechanism capable of a stepless or multiple-step adjustment of a distance between the bridge and the ceiling. This makes it possible to be applied to various kinds of rooms with different heights of ceiling.

### Advantageous Effects of Invention

According to one aspect of the present invention, it is possible to suppress scattering of water droplets or the like to surrounding areas of the device even when the water droplets or the like attach to the bridge.

### Brief Description of Drawings

FIG. 1 is a perspective view of an installed radiation panel device according to an embodiment of the present invention.
FIG. 2 is a perspective view of surrounding areas of a bridge of the radiation panel device.
FIG. 3 is a plan view of the radiation panel device.
FIG. 4 is a side view of the radiation panel device.
FIG. 5 is a perspective view of an upper portion of the bridge.
FIG. 6 is a cross-sectional view taken along line VI-VI of FIG. 4.
FIG. 7 is a cross-sectional view taken along line VII-VII of FIG. 4.
FIGS. 8(a) and 8(b) are perspective views of each of the serial piping systems.
FIGS. 9(a) and 9(b) are perspective views of each of the serial piping systems.
FIGS. 10(a) and 10(b) are diagrams of a header portion. FIG. 10(a) is a plan view of the header portion. FIG. 10(b) is a side view of the header portion.

### Description of Embodiments

One embodiment of the present invention will be described in detail with reference to the accompanying drawings.

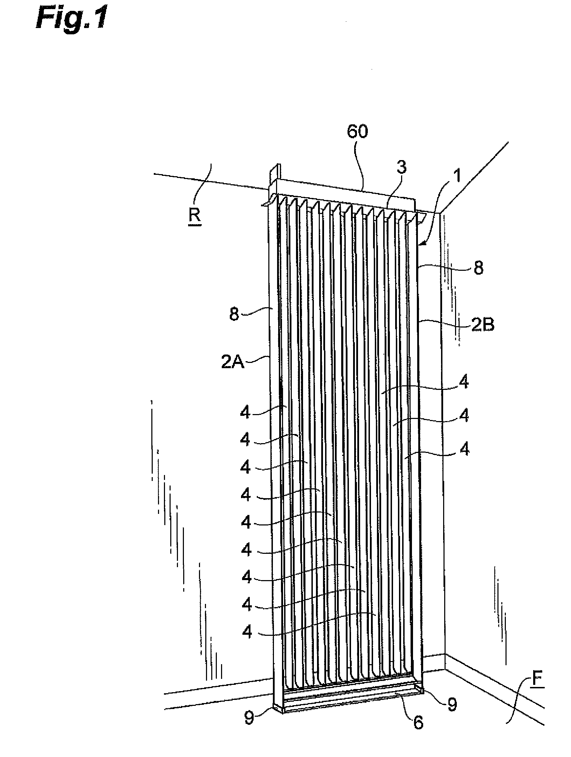

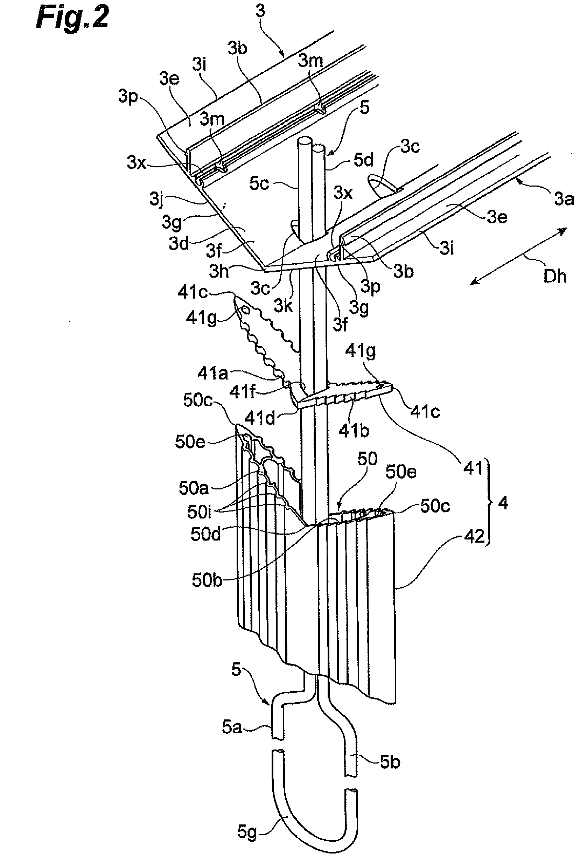

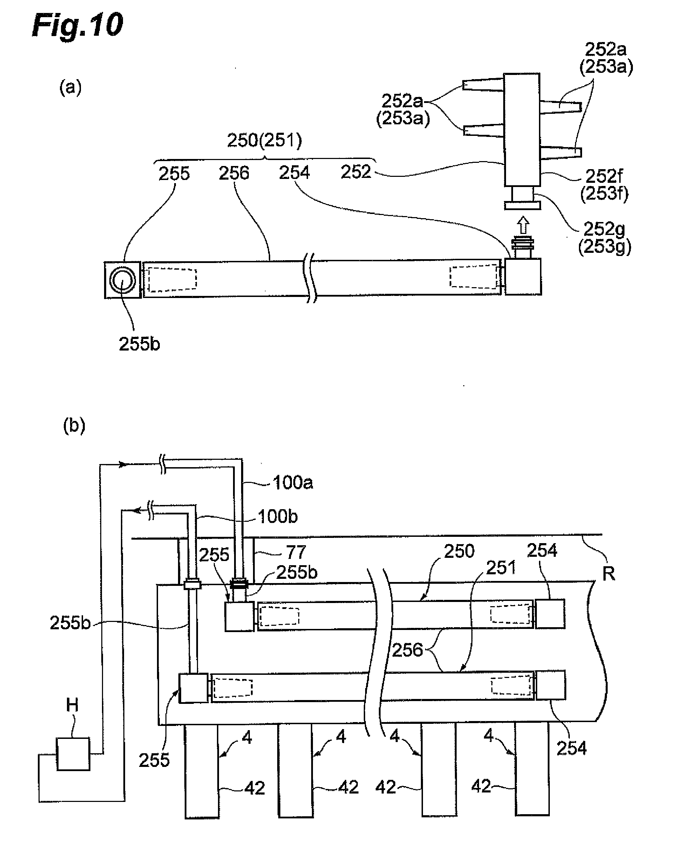

As illustrated in FIG. 1, a radiation panel device 1 according to the present embodiment is installed, for example, at a corner of a room in a building and performs radiant heating or radiant cooling. The radiation panel device 1 includes a plurality of panels 4, each being long and flat, and a heating medium flow pipe 5 (refer to FIG. 2) provided in each of the panels 4. Each of the heating medium flow pipes 5 is connected to each other, and further connected to a heat source H (refer to FIGS. 10(a) and 10(b)) through pipes 100a and 100b so as to provide a circulating line of the heating medium. Circulation of the heating medium provides emissivity to the panels 4. This makes it possible to perform radiant heating of the room. When the temperature of the heating medium is lower than the room temperature, it is possible to perform radiant cooling of the room.

The radiation panel device 1, as described above, includes the plurality of panels 4 and the heating medium flow pipe 5. The radiation panel device 1 further includes a pair of supports 2A and 2B upstanding in the vertical direction between a ceiling board R and a floor board F of the room, a bridge 3 that is installed on upper end sides of the pair of support 2A and 2B and holds the plurality of panels 4, and a condensation water reception member 6 provided beneath the panels 4 and above the floor board F, and is configured to receive condensation water.

Each of the supports 2A and 2B includes a support body 8 having a length ranging from the floor board F to the ceiling board R, and a column base member 9 externally fitted to a lower end of the support body 8 and fixed to the floor board F. The condensation water reception member 6 is connected to a drain pipe (not illustrated). The condensation water flowing down along the panel 4 gathers in the condensation water reception member 6 and is discharged to the outside through the drain pipe.

The bridge 3 holds the plurality of panels 4 suspending in an upright state, arranged in a lateral direction with a predetermined distance between each other. The predetermined distance and the number of panels 4, or any other condition, may be determined appropriately according to the size and ceiling height of the room, or desired performance. The bridge 3 is also referred to as an "upper frame".

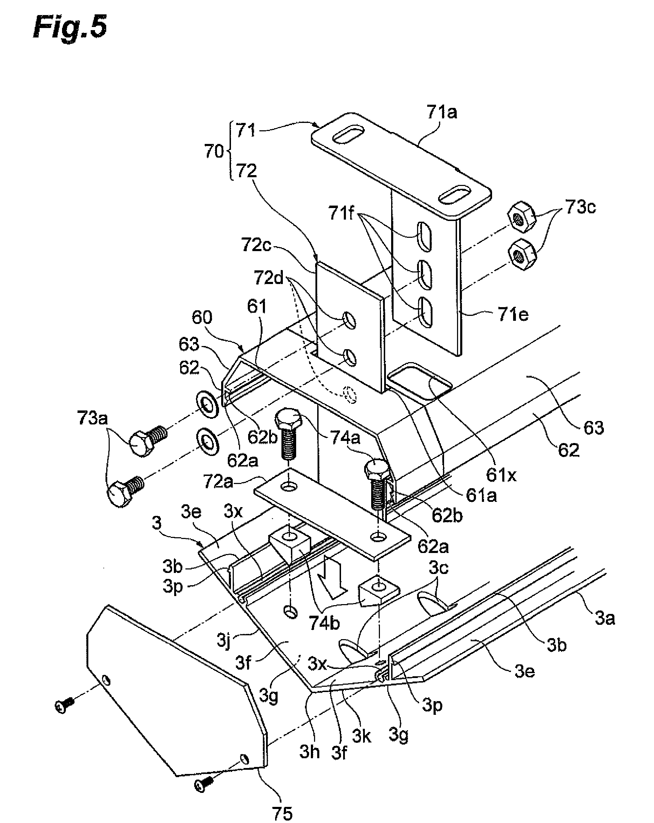

As illustrated in FIGS. 2 and 5, the bridge 3 includes a support plate 3a that is long and extending in a horizontal direction Dh that is a thickness direction of the panel 4, and a pair of ribbed walls 3b upstanding on an upper surface 3f of the support plate 3a. The pair of ribbed walls 3b extends in a longitudinal direction of the support plate 3a, and is arranged in parallel with each other and facing each other. On an upper end of the pair of ribbed walls 3b, a pawl 3p configured to engage with a cover member 60 is provided. The bridge 3 is formed by extruding metal such as aluminum and stainless steel.

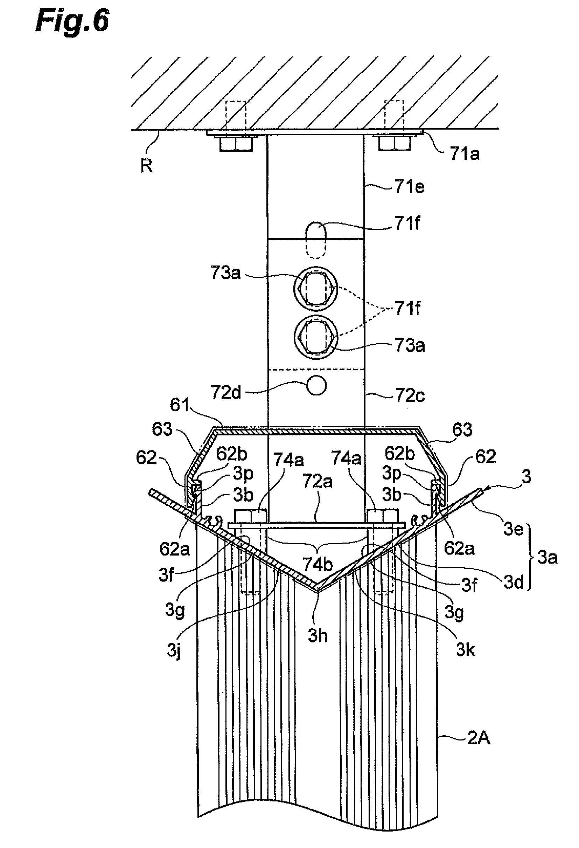

As illustrated in FIGS. 2, 6, and 7, the support plate 3a has a V-shaped cross section and includes a pair of inclination portions 3j and 3k on widthwise both-end portions of the support plate 3a. A lower surface (lower surface portion) 3g of the inclination portions 3j and 3k is downwardly inclined toward a corner portion (widthwise center portion) 3h. The corner portion 3h is formed by connecting the lower end portions of the pair of inclination portions 3j and 3k to each other. The pair of inclination portions 3j and 3k have the same widthwise length, and have the same inclination angle from a horizontal plane that is substantially parallel to the floor board F and the ceiling board R. In other words, the support plate 3a has the pair of inclination portions 3j and 3k that has symmetrical and equilateral V-shape. The inclination angles of the pair of inclination portions 3j and 3k may be 15 to 45 degrees, and more preferably, may be around 30 degrees.

The pair of inclination portions 3j and 3k of the support plate 3a is formed by performing extrusion molding of aluminum or other metal to form a rectangular steel plate, and then further applying bending or other processing to this steel plate. Specifically, the steel plate is bent at a border (folding line) on the widthwise center portion (corner portion 3h) to form the pair of inclination portions 3j and 3k.

The support plate 3a includes a center portion 3d on the inside, sandwiched between the pair of ribbed walls 3b, and a pair of flange portions 3e protruding further out than each of the ribbed walls 3b. At each of the positions facing each of the panels 4 at the center portion 3d, a through hole (run-through portion) 3c is provided so as to cut out the corner portion 3h. In vicinity of the pair of ribbed walls 3b, there is provided a pair of tightening holes 3m (refer to FIG. 2) through which a bolt (fixture) 78 for fixing the panel 4 is inserted. Through the through hole 3c, the heating medium flow pipe 5 is inserted.

At each of the ends of the support plate 3a, a screw receiving portion 3x for screwing a lid portion 75 (refer to FIG. 5) is provided. The support plate 3a is produced by extrusion molding in some cases. The screw receiving portion 3x is provided on the support plate 3a, over an entire area in a longitudinal direction.

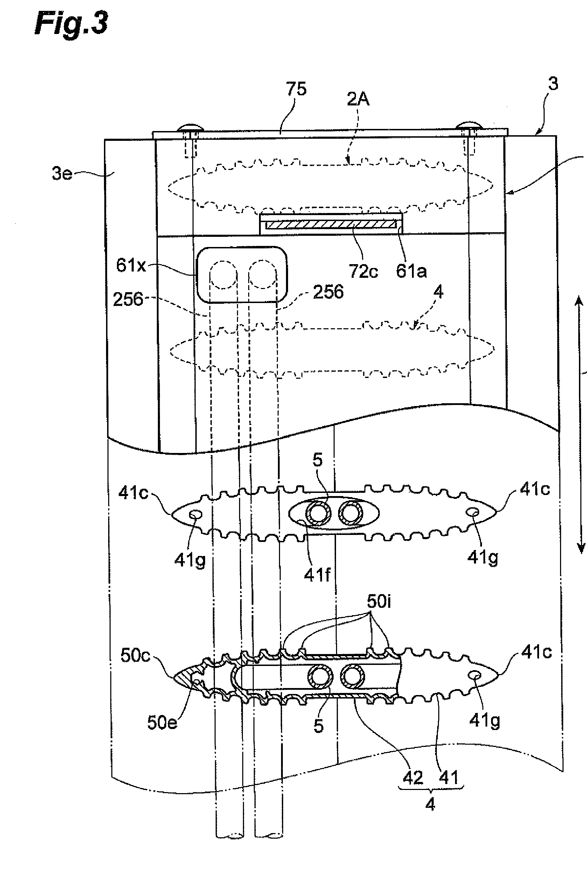

As illustrated in FIGS. 2, 3, and 7, the panel 4 extends in the vertical direction. The panel 4 includes a long cylindrical member 42 which has a flat cross section, and a cap 41 that closes over at least an upper end surface 50 of the cylindrical member 42 and is sandwiched between the support plate 3a and the cylindrical member 42. The cylindrical member 42 is formed, for example, by performing extrusion molding of metal. A material of the cylindrical member 42 is not particularly limited, although aluminum can be suitably used to achieve weight reduction.

The upper end surface 50 of the cylindrical member 42 is cut to be substantially V-shaped to fit onto the support plate 3a of the bridge 3. The upper end surface 50 includes a pair of panel inclination portions 50a and 50b that has widthwise both-end portions 50c at the upper end and is downwardly inclined toward a panel corner portion (widthwise center portion) 50d. One end portion of the widthwise both-end portions 50c of the cylindrical member 42 faces one inclination portion 3j of the bridge 3. The other end portion of the widthwise both-end portions 50c faces the other inclination portion 3k of the bridge 3. The pair of panel inclination portions 50a and 50b have the same widthwise length, and have the same inclination angle from a horizontal plane that is parallel to the floor board F and the ceiling board R. The inclination angle of each of the pair of panel inclination portions 50a and 50b, similarly to the inclination angle of each of the inclination portions 3j and 3k of the bridge 3, is 15 to 45 degrees, and more preferably, may be around 30 degrees.

The upper end surface 50 of the cylindrical member 42 includes a pair of tightening holes 50e to which the bolt (fixture) 78 is screwed. In an area inward from the pair of tightening holes 50e, the heating medium flow pipe 5 is housed.

An outer surface of the cylindrical member 42 has a plurality of fins 50i protruding in a wave-like form so as to increase the area that transfers heat with the outside air. The plurality of fins 50i extends in a longitudinal direction of the cylindrical member 42, namely, in the vertical direction when the cylindrical member 42 is upstanding. The plurality of fins 50i further includes a function, in cooling, to guide condensation water attached to the cylindrical member 42 downwardly toward the condensation water reception member 6.

The cylindrical member 42 houses the heating medium flow pipe 5, which is substantially U-shaped and is folded back in a curved state at a lower end side of the cylindrical member 42. A portion that forms a passage through which the heating medium of the heating medium flow pipe 5 flows downwardly is a forward path-side housing portion 5a. A portion that forms a passage through which the heating medium flows upwardly is a return path-side housing portion 5b. A portion that links the forward path-side housing portion 5a and the return path-side housing portion 5b is a fold-back portion 5g.

The forward path-side housing portion 5a and the return path-side housing portion 5b are located together proximate to the widthwise center of the cylindrical member 42, on the upper end side of the cylindrical member 42. The heating medium flow pipes 5 gathered around the center penetrate through the cap 41 attached on the upper end surface 50 of the cylindrical member 42 and the support plate 3a of the bridge 3, and protrude above the bridge 3. The heating medium flow pipe 5 has extending portions 5c and 5d that protrude above the upper surface 3f of the bridge 3. More particularly, the portion linked to the forward path-side housing portion 5a is a forward path-side extending portion 5c, and the portion linked to the return path-side housing portion 5b is a return path-side extending portion 5d.

The heating medium flow pipe 5 is made, for example, of a resin pipe with an inner diameter of 7 mm. The heating medium flow pipe 5 made of resin has flexibility and can be bent to a small radius, facilitating processing of the heating medium flow pipes 5 and mounting operation of the heating medium flow pipe 5 onto the cylindrical member 42. For resin pipes, cross-linked polyethylene pipes, and a resin material of polybutene or polyolefin may be employed.

The cap 41 is a plate that covers the upper end surface 50 of the cylindrical member 42. The cap 41, in side view, curves to be substantially V-shaped so as to fit onto the support plate 3a. The cap 41 is arranged between the support plate 3a of the bridge 3 and upper end surface 50 of the panel 4. The cap 41 is sandwiched between the support plate 3a and the panel 4, fixed by the bolt 78.

The cap 41 will be described in more detail. The cap 41 includes a pair of cap inclination portions 41a and 41b, which has widthwise both-end portions 41c on the upper end and is downwardly inclined toward a cap corner portion (widthwise center portion) 41d. At the cap 41, one end portion of the widthwise both-end portions 41c faces one inclination portion 3j of the bridge 3, and the other end portion of the widthwise both-end portions 41c faces the other inclination portion 3k of the bridge 3. The inclination angle of the pair of cap inclination portions 41a and 41b is substantially equal to the inclination angle of the pair of inclination portions 3j and 3k of the bridge 3, and to the inclination angle of the pair of panel inclination portions 50a and 50b of the cylindrical member 42. The outer shapes of the cap inclination portions 41a and 41b are formed in the shape of the outer periphery of the cylindrical member 42.

At the cap 41, a through hole 41f is provided so as to cut out the cap corner portion 41d, and the heating medium flow pipe 5 is inserted through the through hole 41f. Furthermore, in the vicinity of widthwise both-end portions 41c of the cap 41, there is provided a pair of tightening hole 41g through which the bolt 78 is inserted.

The cap 41 is made from resin, for example, that contains as a main component acrylonitrile - styrene - acrylate (ASA) or acrylonitrile - ethylene-propylene-diene - styrene (AES). The cap 41 has a function to suppress heat transfer between the cylindrical member 42 and the bridge 3.

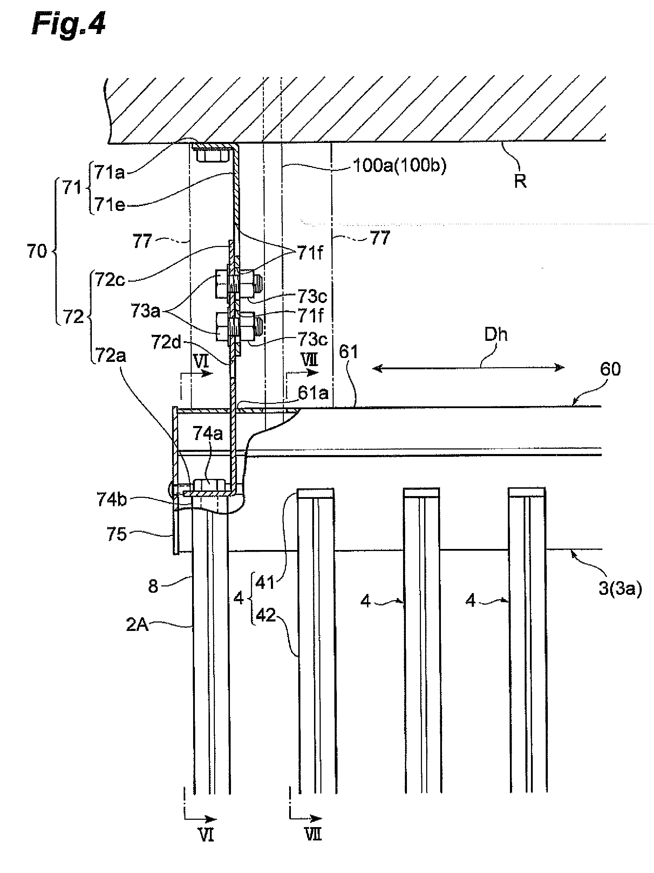

Next, an upper portion structure of the bridge 3 will be described with reference to FIGS. 4, 5, and 6. The upper portion of the bridge 3 is covered with the cover member 60 and is fixed to the ceiling board R via a supporting member 70. The supporting member 70 functions as an adjustment mechanism for adjusting the distance between the bridge 3 and the ceiling board R. In the present embodiment, multiple-step adjustment mechanism will be described as an example, although it is possible to employ a stepless adjustment mechanism.

The supporting member 70 includes a ceiling mounting member 71 to be fixed to the ceiling board R, and a bridge mounting member 72 to be fixed to the bridge 3. The ceiling mounting member 71 includes a flat plate portion 71a to abut against and be screwed to the ceiling board R, and an adjustment portion 71e having a rectangular shape and extending downwardly in the vertical direction from the flat plate portion 71a. The adjustment portion 71e has three adjustment holes 71f arranged in line in the vertical direction for height adjustment. The adjustment hole 71f is a long hole that is elongated vertically so as to allow fine adjustment.

The bridge mounting member 72 is disposed on the upper surface 3f side of the support plate 3a and includes a base board portion 72a and an adjustment portion 72c. The base board portion 72a is fixed to the support plate 3a using a bolt 74a. The adjustment portion 72c has a rectangular shape, upstanding from the base board portion 72a, and protrudes by penetrating through the cover member 60. The adjustment portion 72c has three adjustment holes 72d for height adjustment, arranged in a line in the vertical direction.

Adjustment of the height of the ceiling board R using the supporting member 70 is performed by appropriately selecting the adjustment hole 71f on the adjustment portion 71e of the ceiling mounting member 71 and the adjustment hole 72d on the adjustment portion 72c of the bridge mounting member 72, and then by appropriately adjusting the mutual position thereof. Next, a shaft portion of the bolt 73a is inserted into each of the positioned adjustment holes 71f and 72d and each of the adjustment portions are fixed with a nut 73c.

On the upper surface 3f of the bridge 3, a pair of spacers 74b is disposed. The spacer 74b has a substantially triangular cross section, absorbs the inclination angle of each of the inclination portions 3j and 3k, and stabilizes the base board portion 72a of the bridge mounting member 72. The base board portion 72a is placed on the pair of spacers 74b and fixed to the bridge 3 with the bolt 74a. The bolt 74a penetrates through the bridge 3 and is screwed to the support body 8 of the support 2A arranged beneath the bridge 3.

The cover member 60 that covers the upper surface 3f of the bridge 3 extends in the longitudinal direction of the bridge 3. The cover member 60 includes a roof portion 61, a pair of rising portions 62, and a pair of connecting portions 63. The roof portion 61 has a rectangular shape and is parallel to the ceiling board R. The pair of rising portions 62 has a rectangular shape and is perpendicular to the ceiling board R. The pair of connecting portions 63 has a rectangular shape and connects the roof portion 61 with the rising portion 62. Inside the cover member 60 is provided a heat-insulating material (not illustrated), which suppresses temperature change of the heating medium at the upper surface 3f of the bridge 3.

The roof portion 61 has an insertion hole 61a through which the adjustment portion 72c of the bridge mounting member 72 is inserted. The roof portion 61 has a through hole 61x. The pipes 100a and 100b connected to the heating medium flow pipe 5 penetrate through the through hole 61x. The pipes 100a and 100b are connected to the heat source H (refer to FIGS. 10(a) and 10(b)) and to the heating medium flow pipe 5. The heating medium is supplied to each of the panels 4 through the pipes 100a and 100b. Between the cover member 60 and the ceiling board R, a wiring cover 77 is upstanding so as to sandwich the supporting member 70, and the pipes 100a and 100b. The upstanding wiring cover 77 prevents the supporting member 70 and the pipes 100a and 100b from being exposed and their by suppressing external influence including unexpected impact and dust, and enhancing appearance.

A lower end of the rising portion 62 has a pawl 62a to be engaged with the pawl 3p on the ribbed wall 3b. Engaging the pawl 62a of the rising portion 62 with the pawl 3p of the ribbed wall 3b prevents the cover member 60 from coming off upwardly. Furthermore, a protruding piece 62b protrudes inwardly at an upper portion of the rising portion 62. The protruding piece 62b contacts the upper end of the ribbed wall 3b in an engagement state. Therefore, the protruding piece 62b and the pawl 62a sandwich the pawl 3p of the ribbed wall 3b, making it possible to enhance a fixation state of the cover member 60 onto the bridge 3.

The cover member 60 and the bridge 3 are fixed, as described above, by engagement of the pawl 62a of the rising portion 62 with the pawl 3p of the ribbed wall 3b. As a result, the flange portion 3e of the bridge 3 protrudes further out ward than the rising portion 62, which is at widthwise both-end portions of the cover member 60. This outward protrusion of the flange portion 3e can prevent the configuration of the upper portion of the bridge 3 from being visually recognized, leading to enhanced appearance.

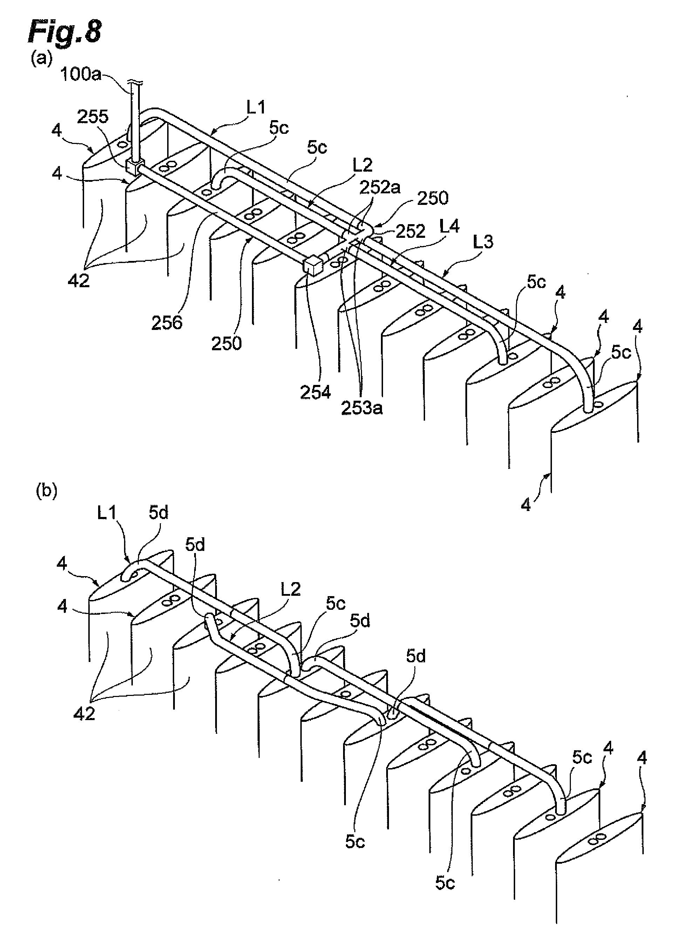

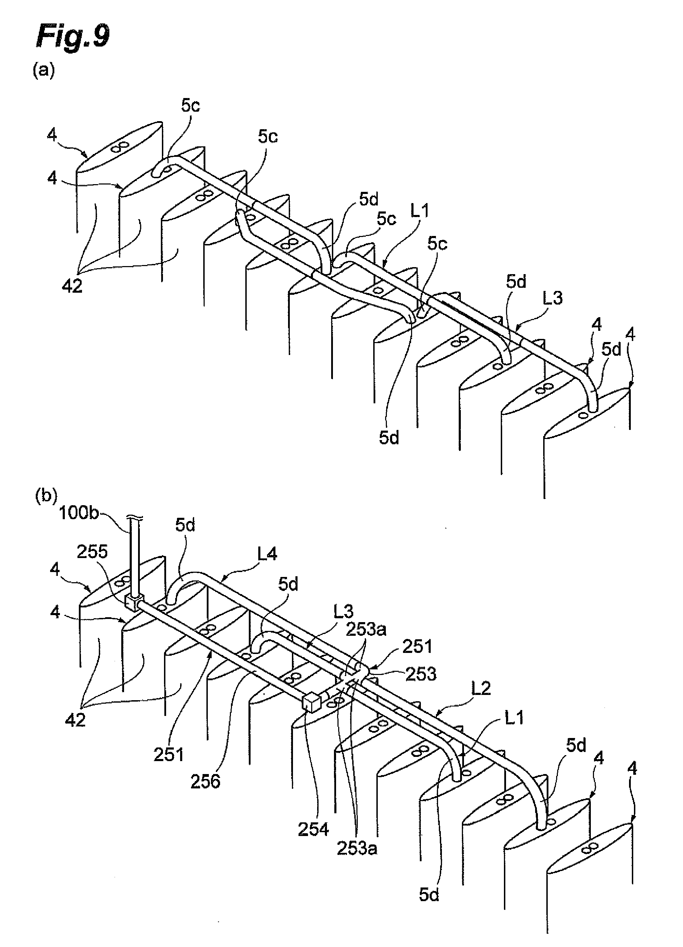

Next, connection of each of the heating medium flow pipes 5 housed in the plurality of cylindrical members 42, and a heating medium passage route provided by the connection of the heating medium flow pipe 5 will be described with reference to FIGS. 8(a), 8(b), 9(a) and 9(b). Note that, in FIGS. 8(a), 8(b), 9(a) and 9(b), the bridge 3 is omitted, and for convenience of description, the V-shaped panel inclination portions 50a and 50b above the panels 4 are replaced with schematically drawn flat surfaces.

The heating medium flow pipe 5 housed in the panel 4 includes the forward path-side extending portion 5c and the return path-side extending portion 5d, each protruding above the bridge 3 and is curved above the bridge 3 in the longitudinal direction of the bridge 3. The return path-side extending portion 5d is connected to the forward path-side extending portion 5c of another heating medium flow pipe 5 housed in another panel 4. The forward path-side extending portion 5c is connected to the return path-side extending portion 5d of another heating medium flow pipe 5 housed in another panel 4. As a result, the plurality of heating medium flow pipes 5 come into connection in series with each other by the connection of the return path-side extending portion 5d and the forward path-side extending portion 5c, so as to provide serial piping systems L1, L2, L3, and L4.

The serial piping system L1 will be described as a representative of the serial piping systems L1, L2, L3, and L4. The forward path-side extending portion 5c (refer to FIG. 8(a)) protruding from the leftmost cylindrical member 42 is connected to a branch pipe 252a provided at a parallel distribution portion 252 of an upstream header portion 250 to which the heating medium is introduced. The forward path-side extending portion 5c is joined, through a substantially U-shaped flow passage housed in the cylindrical member 42, to the return path-side extending portion 5d (refer to FIG. 8(b)), which protrudes from the cylindrical member 42. The return path-side extending portion 5d is connected to the forward path-side extending portion 5c protruding from the fifth cylindrical member 42 from the left. The forward path-side extending portion 5c is joined, through the substantially U-shaped flow passage, to the return path-side extending portion 5d, which protrudes from the cylindrical member 42. This return path-side extending portion 5d is connected to the forward path-side extending portion 5c protruding from the fourth cylindrical member 42 from the right. The forward path-side extending portion 5c is joined, through a substantially U-shaped flow passage, to the return path-side extending portion 5d (refer to FIG. 9(b)), which protrudes from the cylindrical member 42. This return path-side extending portion 5d is connected to a branch pipe 253a provided at a parallel joining portion 253 of a header portion 251 downstream to which the heating medium is discharged.

Each of the other serial piping systems L2 to L4, similarly to the serial piping system L1, is connected to the branch pipe 252a provided at the parallel distribution portion 252 of the header portion 250 upstream, and is also connected to the branch pipe 253a provided at the parallel joining portion 253 of the header portion 251 downstream.

The header portions 250 and 251 will be described in detail with reference to FIGS. 10(a) and 10(b). The header portions 250 and 251 substantially have the same configuration. Therefore, for overlapping portions, description will be made for the configuration of the header portion 250 and description of the header portion 251 will be omitted.

As illustrated in FIG. 10(a), the header portion 250 includes the parallel distribution portion 252, a joint portion 254 connected to the parallel distribution portion 252, a joint portion 255 connected to the pipe 100a linked to the heat source H, and a header portion pipe 256 linking the joint portion 254 with the joint portion 255.

The parallel distribution portion 252 includes a cylindrical joint pipe 252g for connecting the joint portion 254, a main pipe 252f that receives heating medium through the joint pipe 252g, and the plurality of branch pipes 252a branched from the main pipe 252f. The plurality of branch pipes 252a distributes the heating medium introduced to the main pipe 252f to each of the serial piping systems L1 to L4.

As illustrated in FIG. 10(b), the header portion 250 is connected to the heat source H through the pipe 100a and distributes the heating medium flowing from the heat source H evenly to each of the serial piping systems L1 to L4. The header portion 251 is connected to the heat source H through the pipe 100b, consolidates the heating medium discharged from each of the serial piping system L1 to L4, and returns the consolidated heating medium to the heat source H.

The joint portion 255 of the header portion 250 is connected to the pipe 100a through a joint pipe 255b. The pipe 100a is connected to the heat source H through the ceiling board R and the ceiling back space. The joint pipe 255b penetrates through the cover member 60 and extends toward the ceiling board R. Similarly, the joint portion 255 of the header portion 251 is connected to the pipe 100b through the joint pipe 255b. The pipe 100b is connected to the heat source H through the ceiling board R and the ceiling back space.

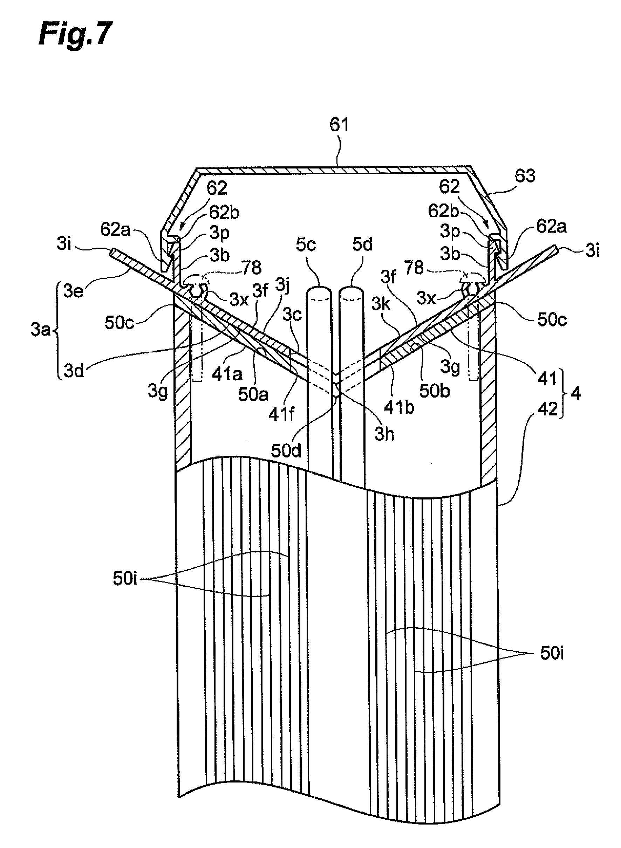

In this manner, the radiation panel device 1 according to the present embodiment includes, as illustrated in FIGS. 2 and 7, the bridge 3 is disposed horizontally in a state closely facing the ceiling of the room or the like, between the support 2A and 2B. The bridge 3 includes the pair of inclination portions 3j and 3k having the widthwise both-end portion 3i as the upper end and being downwardly inclined toward the corner portion (widthwise center portion) 3h. As a result, the water droplets attached to the lower surface 3g of the bridge 3, caused by the heating medium flow or other factors, gather at the corner portion 3h, and flow through the fin 50i of the cylindrical member 42, or the like, then fall downwardly in the vertical direction. In other words, the water droplets flow down in the vicinity of the panel corner portion 50d at the widthwise center portion of the cylindrical member 42, and then fall downwardly in the vertical direction. There is a certain distance between the panel corner portion 50d to the widthwise both-end portions 50c. Therefore, it is possible to suppress splashing of the water droplets beyond the width of the condensation water reception member 6 toward the widthwise outer area. In this manner, even if water droplets attach to the bridge 3, it is possible to suppress scattering of the water droplets to surrounding areas of the device.

In the radiation panel device 1 according to the present embodiment, the bridge 3 is V-shaped with the pair of inclination portions 3j and 3k. This shape of the bridge 3 allows most of the water droplets (condensation water) attached to the lower surface 3g to fall from the corner portion 3h formed by connecting the pair of inclination portions 3j and 3k. Accordingly, the width of the water droplets falling position can be smaller than a case where the corner portion 3h has a predetermined width instead of having a pointed shape. The radiation panel device 1 can be installed along a wall surface of a room. In this case, locating the corner portion 3h near the wall surface makes it possible to decrease splashing of the water droplets toward the room.

Furthermore, the radiation panel device 1 according to the present embodiment has the pair of inclination portions 3j and 3k that is equilaterally and symmetrically V-shaped. This configuration allows water droplets attached to the lower surface 3g of the bridge 3 to fall from a widthwise center portion of the bridge 3, and to reliably receive the water droplets in the condensation water reception member 6. With this configuration, the cylindrical member 42 also has a symmetrical shape. Therefore, it is possible to give similar appearance to both sides, and to use the panel device as a natural partition at a center of the room. The pair of inclination portions 3j and 3k that has an equilateral V-shape allows for a sufficient inclination angle of the pair of inclination portions 3j and 3k even in a limited space.

Furthermore, in the radiation panel device 1 according to the present embodiment, the tightening hole 3m for insertion of the bolt (fixture) 78 for fixing the cylindrical member 42 is arranged to be at a position (widthwise both-end portion 50c side) above that of the through hole 3c through which the heating medium flow pipe 5 is inserted. Around the through hole 3c, thermal effect of the heating medium flow pipe 5 generates water droplets, which fall along the inclination instead of staying in surrounding areas of the bolt 78. This can suppress rusting of the bolt 78 or the like.

In the radiation panel device 1 according to the present embodiment, the upper portion of the bridge 3 is covered with the cover member 60. Furthermore, both ends in the longitudinal direction are covered with the lid portion 75. Accordingly, it is possible to make the device insusceptible to external influences such as an unexpected impact and dust. Furthermore, this also enhances appearance.

The radiation panel device 1 according to the present embodiment further includes the header portion 250 that supplies heating medium evenly to each of the cylindrical members 42. The header portion 250 includes the joint pipe 255b. The joint pipe 255b, as illustrated in FIGS. 10(a) and 10(b), is arranged so as to extend toward the ceiling board R by penetrating through the cover member 60. Accordingly, it is possible to connect the heating medium flow pipe 5 to the heat source H through the ceiling back space, and to suppress exposure of the heating medium flow pipe 5. Note that the portion that penetrates the cover member 60 may be the portions of the header portion 250 other than the joint pipe 255b described above.

Moreover, in the radiation panel device 1 according to the present embodiment, the bridge 3 is fixed to the ceiling board R via the supporting member 70. This enables application to various kinds of rooms with different heights of ceiling. The bridge 3 is fixed to the ceiling board R via the supporting member 70, while being supported by the column base member 9 (refer to FIG. 2) fixed to the floor board F. If positional adjustment is not possible with the above-described supporting member 70, positional adjustment needs to be performed on the side of column base member 9. If so, cutting or other work on the column base member 9 would be required. Fortunately, in the radiation panel device 1 according to the present embodiment, it is possible to avoid such a labor.

Having thus described the embodiments of the present invention, the invention is not limited to the above embodiments. The radiation panel device according to the present invention may be modified or applied with another member within a scope that does not change the spirit stated in each of the claims.

The exemplary bridge 3 has inclination both on the upper surface 3f and the lower surface 3g. Alternatively, the lower surface alone may be inclined in the configuration. Cross section of the bridge 3 may have an above-described equilateral V-shape, or a shape having the corner portion 3h closer to one side. Moreover, it is possible to employ the configuration that includes a horizontal portion between the pair of inclination portions 3j and 3k and includes a plurality of corner portions formed by addition of the horizontal portion. Also, the flange portion 3e need not be inclined to follow the pair of inclination portions 3j and 3k, but may protrude horizontally. In this case, the flange potion protruding horizontally can be embedded in the ceiling. Accordingly, the upper portion of the bridge 3 can be arranged in the ceiling back space.

The member that receives falling water droplets is described as the condensation water reception member 6 that is a member linked to the drain pipe. This member may be, however, replaced with a sponge or the like. In the description, positional (height) adjustment using the ceiling mounting member 71 and the bridge mounting member 72 is performed by changing the combination of the adjustment holes 71f and 72d, that is, by multiple step positional adjustment. Alternatively, a stepless positional adjustment may be performed in which both members are slid and fixed at any appropriate positions, instead of using combination of the tightening holes.

### Reference Signs List

- 1: radiation panel device
- 3: bridge
- 3g: lower surface of bridge
- 3h: corner portion of bridge
- 3j, 3k: inclination portion
- 4: panel
- 5: heating medium flow pipe
- 60: cover member
- 70: supporting member (adjustment mechanism)
- 78: bolt (fixture)
- 250, 251: header portion
- R: ceiling board

## Claims

1. A radiation panel device comprising:
a bridge disposed horizontally;
a plurality of panels suspending from the bridge; and
a heating medium flow pipe provided in each of the panels and connected to each other above the bridge,
the radiation panel device being configured to provide emissivity to each of the panels by connecting the heating medium flow pipe to a heat source so as to circulate a heating medium,
wherein a lower surface portion of the bridge has a pair of inclination portions on widthwise both-end portions, the pair of inclination portions being inclined downwardly toward a widthwise center portion, and
each of the panels is attached to the lower surface portion of the bridge in a state where one of the widthwise end portions faces one of the inclination portions of the bridge and the other of the widthwise end portions faces the other of the inclination portions.

2. The radiation panel device according to claim 1, wherein the lower surface portion of the bridge forms a V-shape by connecting each of the lower end portions of the pair of inclination portions to each other.

3. The radiation panel device according to claim 2, wherein the bridge forms an equilateral and symmetrical V-shape at the pair of inclination portions.

4. The radiation panel device according to any one of claims 1 to 3,
wherein the bridge is configured such that a fixture for fixing each of the panels is provided at panel-widthwise both-end sides on an upper side of the inclination portion , and
a run-through portion through which the heating medium flow pipe is inserted is provided at a panel-widthwise center portion.

5. The radiation panel device according to any one of claims 1 to 4, wherein an upper portion of the bridge is covered with a cover member.

6. The radiation panel device according to claim 5,
wherein the bridge is disposed horizontally in a state closely facing a ceiling of a room,
the heating medium flow pipe includes a header portion configured to supply a heating medium evenly to each of the panels, and
at least a part of the header portion is arranged so as to extend toward the ceiling by penetrating through the cover member.

7. The radiation panel device according to any one of claims 1 to 6,
wherein the bridge is fixed to a ceiling via a supporting member, and
the supporting member includes an adjustment mechanism capable of a stepless or multiple-step adjustment of a distance between the bridge and the ceiling.
